(19)

Europäisches Patentamt
European Patent Office
Office européen des brevets

(11) EP 2 774 977 A2

(12) **EUROPEAN PATENT APPLICATION**
published in accordance with Art. 153(4) EPC

(43) Date of publication:
**10.09.2014 Bulletin 2014/37**

(51) Int Cl.:
*C12G 1/02* (2006.01)     *C08B 37/00* (2006.01)
*C08L 5/08* (2006.01)

(21) Application number: **12799339.2**

(22) Date of filing: **02.11.2012**

(86) International application number:
**PCT/PT2012/000043**

(87) International publication number:
**WO 2013/066200 (10.05.2013 Gazette 2013/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.11.2011  PT 2011105981**

(71) Applicants:
• **Universidade De Aveiro**
  **3810-193 Aveiro (PT)**
• **Dão Sul - Sociedade Vitivinícola S.A.**
  **3430-909 Carregal do Sal (PT)**

(72) Inventors:
• **SILVA, Manuel António Coimbra Rodrigues da**
  **P-3810-083 Aveiro (PT)**

• **NUNES, Cláudia Sofia Cordeiro**
  **P-3800-136 Aveiro (PT)**
• **MARICATO, Élia Sofia Oliveira**
  **P-3810-928 Aveiro (PT)**
• **CUNHA, Ângela Maria Martins Vieira da**
  **P-4585-461 Rebordosa (PT)**
• **BARROSO, Sónia Alexandra Leite Velho Mendo**
  **P-3830-189 Ílhavo (PT)**
• **SILVA, José António Lopes da**
  **P-4405-658 Vila Nova de Gaia (PT)**

(74) Representative: **Alves Moreira, Pedro**
  **Rua do Patrocinio, 94**
  **1399-019 Lisbon (PT)**

(54) **WINEMAKING METHOD WITHOUT THE ADMIXTURE OF SULPHUR DIOXIDE, USING CHITOSAN-BASED FILMS**

(57)     The present invention relates to a winemaking process using the traditional method of vinification except that, after fermentation, a chitosan-based film is placed in contact with the wine and no sulfur dioxide is added. The present invention also relates to a process for preparation of a chitosan-based film by modification of the chitosan with natural compounds, which allows to produce chitosan films stable in acidic medium, with high antioxidant activity, while maintaining the antimicrobial activity. In one embodiment, the films are prepared by covalent linkage to the chitosan of molecules, such as genipin, which results in decreasing its solubility in acidic medium, and also of molecules with high antioxidant activity, such as caffeic acid, or grape and wine extracts rich in compounds with antioxidant activity.

EP 2 774 977 A2

## Description

## FIELD OF THE INVENTION

The present invention relates to a winemaking process using the traditional vinification methodology without addition of sulfur dioxide, by placing chitosan-based films in contact with the wine, after fermentation. The present invention also relates to a process for the preparation of a chitosan-based film by the modification of the chitosan with natural compounds which allows the production of chitosan films stable in an acidic medium, with high antioxidant activity, and maintaining the antimicrobial activity.

The addition of a chitosan-based film, exhibiting antimicrobial and antioxidant properties, simultaneously with low solubility in acidic medium, to the winemaking process after fermentation, allows for wine preservation while maintaining its quality, namely, its organoleptic properties and avoiding the sulfur dioxide addition.

## BACKGROUND OF THE INVENTION

The winemaking process comprises the wine preservation stage under conditions allowing its storage without promoting the growth of microorganisms which affect the quality of wine and modify its organoleptic properties.

One of the most used methods for wine preservation is the addition of sulfur dioxide, since it inhibits the growth of microorganisms and acts as an antioxidant by avoiding the browning of the wine.

Although sulfur dioxide is a complete and efficient preservative, its use has been related to intolerance and/or allergic reactions, causing symptoms such as headache, nausea, gastric irritation and breathing difficulties, particularly in asthmatic patients. Thus, the maximum concentration of sulfur dioxide in wine has been progressively reduced.

In an attempt to minimize the effects of sulfur dioxide on the consumers, different methods have been tested to replace its addition in the winemaking process such as: addition of ascorbic acid, dimethyldicarbonate (DMDC), resveratrol and/or other stilbenes (U.S. Patent Application 2009175984 A1), lysozyme (U.S. Patent Application 2008026100 A1, U.S. Patent Application 2010034923 A1) and nisin, as well as the use of new technologies such as pulsed electrical fields and high hydrostatic pressure.

The grape contains a high amount of phenolic compounds in its skin, pulp and seeds, and these are partially transferred to the wine during winemaking. Therefore, the grapes, wine and by-products of winemaking are a good source of phenolic compounds. The main phenolic compounds are flavonoids (anthocyanins, flavan-3-ols and flavonols), stilbenes (resveratrol), phenolic acids (derivatives of cinnamic and benzoic acids), and tannins.

The by-products of winemaking have been used as a source of bioactive compounds, mainly due to the presence of phenolic compounds, to be incorporated into cosmetic, pharmaceutical and food products (U.S. Patent Application 2006078568 A1; U.S. Patent Application 2003108493 A1). The European patent application EP 0448674 A1 describes a winemaking process without the use of sulfur dioxide, based on the addition before, during, and after fermentation of winemaking by-products containing phenolic compounds.

Chitosan is a polysaccharide composed by D-glucosamine and N-acetyl-D-glucosamine residues with an amount of acetylated residues lower than 50%.

The solubilization of chitosan in aqueous medium is due to the protonation of the $-NH_2$ group of the D-glucosamine residues C2, which occurs in dilute acidic solutions (pH below 6.0 when the $-NH_2$ group is mainly protonated and converted to $-NH_3^+$, since the pKa of the glucosamine amine group is 6.3).

Consequently, the protonation of the amine group influences the chitosan antimicrobial properties that essentially depend on the ratio between the number of $-NH_3^+$ and $-NH_2$ groups in the chitosan chain. The chitosan molecular weight is also an important factor for its anti-microbial properties.

As in the case of the anti-microbial activity, the chitosan antioxidant activity is related to its size and acetylation degree. A chitosan with lower acetylation degree has higher antioxidant activity due to its higher ability to complex metal ions, such as $Fe^{2+}$ or $Cu^+$ (Fenton reaction participants).

The presence of the amine group confers to chitosan the biological properties previously described, but also the possibility of occurrence of various chemical reactions, such as acetylation, quaternization, reactions with aldehydes and ketones (originating Schiff bases), alkylation or metal chelation, allowing obtaining a wide variety of modified chitosans, increasing their potential applications.

The grafting and cross-linking are the most widely used methods for the chemical modification of chitosan in order to improve its physical, chemical and mechanical properties.

The covalent linkage of molecules to the main chain of chitosan, namely, by binding antioxidants, antifungal, anti-bacterial and other nutrients with different biological properties, allows obtaining materials with improved properties.

One of the characteristics which has been improved in the matrices based on chitosan is its antioxidant capacity by incorporating natural antioxidants such as phenolic compounds (U.S. Patent Application 2011059162 A1).

The grafting of molecules to the chitosan chain has been performed using different methods, such as, the use of radical mechanism using an oxidizing agent, y radiation (U.S. Patent Application 2005272876 A1) or enzymes. Among the oxidizing agents most commonly used are the potassium persulfate (KPS) and ammonium cerium (IV) nitrate (CAN). These reagents are mainly used to link molecules with vinyl linkages.

The cross-linking of the polymer by a molecule (cross-linking agent), acting as a bridge to connect two or more molecules of chitosan, leads to the formation of a covalent three-dimensional network. The formation of strong and permanent intermolecular bonds allows the improvement of the polymer properties, namely, mechanical strength, chemical stability, water absorption capacity, and solubility, while retaining the biological properties.

Recently, genipin has been successfully used as a cross-linking agent for chitosan due to its characteristics. This compound is the aglycone derivate from the geniposide present in fruits of Gardenia (originally from China). Genipin rapidly reacts with the amino groups, originating blue pigments that are used as natural food dye. Many studies have been made describing the use of genipin as a cross-linking agent for chitosan due to its low cytotoxicity, for example, about 5000 to 10000 times less cytotoxic than glutaraldehyde. The films prepared with the addition of genipin have better mechanical properties, namely higher resistance to tension, are more stable in water, and their antimicrobial activity is similar to the film prepared only with chitosan.

The North American patent application U.S. 20070299034 A1 discloses a process for obtaining polymers of chitin, chitosan or complex chitin-glucan from the biomass of fungi and yeasts, and also refers to the possible application of these polymers in several areas, including as clarifiers in fermented beverages.

Although this application shows that chitosan and the chitin-glucan complexes can be used for the treatment of must and wines as clarifiers, in place of others oenological adjuvants, it is not reported that these compounds may replace the sulfur dioxide addition in wine, acting only as replacement of fining agents and color stabilizers by coprecipitation. In enology, the sulfur dioxide is never used as a clarifying agent and does not stabilize wine color by removing compounds that are important for preserving the organoleptic wine characteristics.

Spagna et al., Fining treatments of white wines by means of polymeric Adjuvants for their stabilization against browning, J. Agric. Food Chem., Vol. 48, pp. 4619-4627, refers the treatment of white wines by polymeric adjuvants such as chitosan, indicating the ability of this polymer to remove polyphenols, thus stabilizing the wines against browning. However, their use in the sulfur dioxide replacement for the wine preservation was never mentioned or suggested.

According to the above, there is a need for a winemaking process which allows for the preservation of organoleptic properties while eliminating the sulfur dioxide addition.

Unexpectedly, it was observed that the process of the present invention with a chitosan-based film, which combines the antimicrobial and antioxidants properties together with a low solubility in acidic media, allows stable and long term wine storage, preserving its organoleptic properties and eliminating the addition of sulfur dioxide.

**SUMMARY OF THE INVENTION**

The present invention relates to a winemaking process comprising the wine production by the traditional method without sulfur dioxide addition, characterized by further comprising the following steps:

  a) preparing a chitosan film by adding a cross-linking agent to chitosan; or

  b) preparing a modified chitosan film comprising:

  • modifying the chitosan by covalent linkage to antioxidant phenolic compounds,

  • forming a film by reacting the modified chitosan with a plasticizer and a cross-linking agent, and

  • neutralizing the previous film;

  c) contacting the chitosan film obtained in any of the preceding steps with the wine after the fermentation.

In one embodiment of the invention, in step c), 100 cm$^2$ of chitosan-based film is placed in contact with 750 mL of wine.

In another embodiment of the invention, in step b), the chitosan modification comprises the steps of:

- dissolving chitosan in acidic medium until a final concentration of 1. 5 % (w/V);

- adding, simultaneously, to the solution obtained in the previous step, an oxidant and an antioxidant phenolic compound; and

- maintaining the above obtained mixture under inert atmosphere, in the dark for, at least, 3 hours at a temperature of 40 °C.

In a further embodiment of the invention, in step b), the formation of the modified chitosan film comprises the steps of:

- dissolving the modified chitosan in acidic medium;

- adding a plasticizer to the previous solution and allowing to react at a temperature of 50 °C for 10 minutes;

- after cooling to room temperature, adding a cross-linking agent and stirring for 30 minutes;

- filtering and drying the previous solution to obtain a modified chitosan-based film; and

- washing the aforementioned modified chitosan-based film with methanol and drying at room temperature.

In another embodiment of the invention, in step b), the neutralization of the chitosan-based film comprises the steps of:

- neutralizing the modified chitosan-based film with a NaOH solution for 1 hour and washing with water until pH 6; and

- drying at room temperature for, at least, 18 hours.

In one embodiment of the invention, the antioxidant phenolic compound is selected from the group consisting of caffeic acid and phenolic compounds extracted from the grape or the wine.
In a preferred embodiment of the invention, caffeic acid is used in a ratio of 3 mg of caffeic acid per gram of chitosan solution.
In another preferred embodiment of the invention, the antioxidant phenolic compounds extracted from grape or wine are selected from phenolic acids and anthocyanins.
In a further embodiment of the invention, the antioxidant phenolic compounds extracted from grape or wine are used in a ratio of 0.7 mg of extract per gram of chitosan solution.
In another embodiment of the invention, the oxidant is selected among potassium persulfate (KPS) and ammonium cerium (IV) nitrate (CAN).
In a preferred embodiment of the invention, the oxidant is 60 mM ammonium cerium (IV) nitrate (CAN) in a ratio of 1 mL of CAN solution per gram of chitosan solution.
In still another embodiment of the invention, the plasticizer is glycerol in a ratio of 1 % w/w by weight of solution.
In another preferred embodiment, the cross-linking agent is genipin in a ratio of 0.05% in relation to the film.
The present invention also relates to the production process of a chitosan-based film for application in the winemaking process.

BRIEF DESCRIPTION OF THE DRAWINGS

A detailed description of the invention is set forth herein below with reference to the attached drawings, in which:

Figure 1 shows the sensorial analysis of white wines, after 9 months, produced with sulfur dioxide addition, according to the traditional winemaking process (Sulfur dioxide) and of wine without sulfur dioxide addition, in contact with the chitosan-based film (Chitosan film).

Figure 2 shows the solubility (% of weight loss) of the genipin and caffeic acid modified chitosan film and of the unmodified chitosan film in an aqueous solution at pH 3.5 after 7 days at room temperature under constant stirring (Example 4).

Figure 3 shows the antioxidant activity (% of inhibition) of the genipin and caffeic acid modified chitosan film, and of the unmodified chitosan film (Example 4).

Figure 4 shows the solubility (% of weight loss) and antioxidant activity (% of inhibition) of chitosan-based films modified with phenolic compounds extracted from wine and cross-linked with genipin, and unmodified chitosan films (example 5).

DETAILED DESCRIPTION OF THE INVENTION

The present invention relates to a winemaking process using the traditional method of vinification with the addition of a chitosan-based film in contact with the wine after fermentation, for wine preservation, as an alternative to the sulfur dioxide addition, common to all prior art winemaking process.
The present invention also relates to the process of production of a chitosan-based film, cross-linked with genipin and chemically modified by covalent linkage to antioxidant phenolic compounds, for addition to the winemaking process of the present invention.
It was also verified that this film shows, in addition to the antimicrobial properties of chitosan, increased antioxidant properties when compared to chitosan and, simultaneously, a low solubility in acidic medium, resulting in a film that, once in contact with wine, increases the time and quality of preservation without changing its organoleptic properties.
The production process of the modified chitosan film by covalent linkage of antioxidant phenolic compounds and cross-linked with genipin, according to the present invention, is described herein below.

Production of the modified chitosan

The process of production of the modified chitosan linked to natural molecules consists in adding to the chitosan solution, in an acidic medium, an oxidizing reagent and, simultaneously, the molecules which are to be linked.
The first step consists in dissolving the chitosan of medium molecular weight in an acidic aqueous solution under stirring, for at least 16 hours, preferably at room temperature, so that the final concentration of chitosan solution should be approximately 1.5% (w/V). An oxidant selected from potassium persulfate (KPS) or ammonium cerium (IV) nitrate (CAN), preferably, 60 mM ammonium cerium (IV) nitrate (CAN) is then added to the chitosan solution. This addition is done at a ratio of 1 mL of oxidant per gram of chitosan solution. Antioxidant phenolic compounds selected from the group consisting of caffeic acid and antioxidant phenolic compounds extracted from grape or wine are added simultaneously. In the case of caffeic acid, 3 mg are added (the solution is prepared in ethanol) per gram of chitosan solution, while for antioxidant phenolic compounds extracted from grape or wine a volume corresponding to 0.7 mg of phenolic compounds per gram of chitosan solution is added. After mixing all the reagents, the mixture was kept under inert atmosphere, by bubbling $N_2$ (g) through the mixture placed in a water bath at 40 °C, in the dark for, at least, 3 hours, under constant stirring. After the reaction, acetone is added to precipitate the modified chitosan. The precipitate is obtained by centrifugation (e.g. 15000 rpm for 20 min at 4 °C) and washed with methanol for, at least, 1 hour to remove the excess of unreacted starting compounds.

*Process of production of the modified chitosan-based film*

The modified chitosan-based film is prepared by dissolving the modified chitosan previously obtained in a 5% (V/V) acetic acid solution and, adding to this solution a plasticizer, such as glycerol, in a concentration of 1% in relation to the solution weight, and homogenizing the mixture at a temperature between 40 and 60 °C, preferably at 50 °C, in a water bath, for 10 minutes. This mixture is allowed to cool at room temperature, under continuous stirring (about 30 minutes). A cross-linking agent, genipin, is added to this solution, at a ratio of 0.05% in relation to the film weight. Then, the solution is filtered, degassed and transferred into plates (0.2 g of solution per $cm^2$). Genipin reacts with chitosan for, at least, 6 hours at room temperature. Then, the plate is placed in an oven at 35 °C to form the film by solvent casting (about 16 hours).

The film thus obtained is washed to remove all compounds which are not covalently linked to the chitosan molecules, preferably in a Soxhlet extractor, with methanol for about 2 hours (12 cycles/hour). Alternatively, ethanol can be used as a solvent to wash the film. After washing, the film is allowed to dry at room temperature.

*Neutralization of the modified chitosan-based film*

Finally, in order to promote the antioxidant activity of the film, a neutralization treatment by contact with a solution of sodium hydroxide is required. In a preferred way, the film is placed in a 1 M NaOH solution for 1 hour. After this time, it is washed abundantly with distilled water for complete removal of NaOH and dried at room temperature for, at least, 18 hours. The final pH of the film should be, approximately, 6.

The use of the film thus obtained in the winemaking process occurs after fermentation, preferably in the step of wine bottling, in which the chitosan-based film is placed into the bottle for wine stabilization. The film area to be applied depends on the film properties and the wine type. For a white wine, it is enough to add 100 $cm^2$ of a chitosan-based film cross-linked with genipin per bottle (750 mL of wine). After the film placement, the bottle of wine can be stored and manipulated according to the traditional vinification practice.

Therefore, it is possible to obtain a safe wine, from the point of view of food use, with organoleptic properties and shelf life equal or superior to those produced with sulfur dioxide addition by the traditional method of vinification (see Example 3).

Unexpectedly, the process of the invention herein described allows not only to preserve the antimicrobial activity of chitosan but, surprisingly, to increase the antioxidant activity when compared to that of chitosan, and, also, a low solubility in acid medium, either in relation to chitosan or to the modified chitosan using genipin as cross-linking agent (see examples 4 and 5).

**Examples:**

For a better understanding of the present invention, some examples of the preferred embodiments the invention are described herein below, which are not intended to limit the scope of this invention.

The film solubility is determined by the percentage of weight loss of the film after remaining dipped in an aqueous solution at pH 3.5 for 7 days, in a proportion of 4 $cm^2$ of film area to 30 mL of solution, under orbital agitation at room temperature.

The antioxidant activity of the film is determined by the method of 2,2-azinobis-(3-ethylbenzothiazoline-6-sulfonic acid), ABTS. The $ABTS^{+\bullet}$ solution is prepared by dissolving of 7 mM ABTS in a 2.45 mM potassium persulfate solution and allowing to react, at room temperature in the dark, for 12-16 h. 80 mL of ethanol is added to 1 mL of $ABTS^{\bullet+}$ solution. The film is dipped into the $ABTS^{+\bullet}$ solution in a proportion of 1 $cm^2$ of film to 1.5 mL of solution. The absorbance of the solution at 734 nm is measured after 72 h of reaction. The antioxidant activity was determined by the percentage of inhibition of the $ABTS^{+\bullet}$, calculated as follows:

$$\% \text{ Inhibition} = 100 \text{ x } (Ab\text{-}Aa)/Ab,$$

where:

Ab is the absorbance of $ABTS^{+\bullet}$ solution without the film, and
Aa is the absorbance of $ABTS^{+\bullet}$ solution with the film (both after 72 hours of reaction).

The antimicrobial activity is determined in a yeast culture (*Saccharomyces cerevisiae*). Yeasts are inoculated into a liquid medium, YEPD (composed by 0.5% yeast extract, 1% bactopeptone meat, and 1% glucose) to obtain a concentration of approximately 100 cells per mL. The films are dipped in this suspension, in a proportion of 4 cm$^2$ of film per 10 mL, and are incubated at 25 °C under an orbital agitation of 160 rpm. Cell viability is determined after 48 hours by inoculation in plates containing YEPDA. Colony forming units (CFU) are determined after 36 hours at 25 °C.

Example 1 - Preparation of chitosan-based film modified with caffeic acid

*1.1. Production of modified chitosan*

The chitosan was dissolved in a 5% (V/V) acetic acid aqueous solution, under stirring for 16 hours at room temperature, such that the final concentration of chitosan solution should be approximately 1.5% (w/V). Then, 60 mM ammonium cerium (IV) nitrate (CAN) was added to the solution a ratio of 1 mL per gram of chitosan solution. Simultaneously, 3 mg of caffeic acid per gram of chitosan solution were added. After mixing all reagents, N$_2$ (g) was bubbled through the mixture placed in a water bath at 40 °C, in the dark, for 3 hours under constant stirring. After the reaction, acetone was added to precipitate the modified chitosan. The precipitate was obtained by centrifugation (e.g. 15000 rpm for 20 min at 4 °C) and washed with methanol for 1 hour.

*1.2. Process of production of the modified chitosan-based film*

The chitosan was dissolved in 5% (V/V) acetic acid aqueous solution, under stirring for 4 hours, at room temperature. After complete dissolution, 1% (w/w) glycerol was added and the mixture was homogenized at 50 °C, in a water bath, during 10 minutes. This mixture was allowed to cool at room temperature, under a constant stirring (about 30 minutes). To this solution, a 10% (w/V) genipin solution, prepared in ethanol, was added to obtain a final concentration of 0.05% in relation to the film weight. This mixture was homogenized for 30 minutes under constant stirring. The solution was filtered under vacuum through a porous glass filter (G2) and degassed under vacuum. The solution was transferred into plates (0.2 g solution/cm$^2$) and 6 hours after genipin addition the plates were placed into an oven at 35 °C, for approximately 16 hours for film formation by solvent casting.
The film thus obtained was washed in a Soxhlet extractor with methanol for about 2 hours (12 cycles/hour). After washing, the film was allowed to dry at room temperature.

*1.3. Neutralization of the modified chitosan-based film*

The film was placed in a 1 M NaOH solution for 1 hour. After this time, it was washed abundantly with distilled water for complete removal of NaOH and dried at room temperature for 18 hours. The final pH of the obtained film was, approximately, 6.

Example 2 - Preparation of modified chitosan-based film with antioxidant phenolic compounds extracted from grape or wine

*2.1. Production of modified chitosan*

The chitosan was dissolved in a 5% (V/V) acetic acid aqueous solution, under stirring for 16 hours at room temperature, such that the final chitosan solution concentration should be approximately 1.5% (w/V). Then, 60 mM ammonium cerium (IV) nitrate (CAN) was added to the chitosan solution at a ratio of 1 mL per gram of chitosan solution. Simultaneously, 0.7 mg of wine extracts per gram of chitosan solution was added. After mixing all reagents, N$_2$ (g) was bubbled through the mixture placed in a water bath at 40 °C, in the dark, for 3 hours under constant stirring. After the reaction, acetone was added to precipitate the modified chitosan. The precipitate was obtained by centrifugation (e.g. 15000 rpm for 20 min at 4 °C) and washed with methanol for 1 hour.

*2.2. Process of modified chitosan-based film production*

The chitosan was dissolved in 5% (V/V) acetic acid solution, under stirring during 4 hours, at room temperature. After complete dissolution, 1 % (w/w) glycerol was added and the mixture was homogenized at 50 °C, in a water bath, during 10 minutes. This mixture was allowed to cool at room temperature under a constant stirring (about 30 minutes). To this solution, a 10% (w/V) genipin solution, prepared in ethanol, was added to obtain a final concentration of 0.05% in relation to the chitosan weight. The mixture was homogenized during 30 minutes under constant stirring. The solution was filtered under vacuum through a porous glass filter (G2) and degassed under vacuum. The solution was transferred into plates (0.2 g solution/cm$^2$) and 6 hours after genipin addition the plates were placed into an oven at 35 °C, during approximately 16 hours, for film formation by solvent casting.
The film thus obtained was washed in a Soxhlet extractor with methanol during about 2 hours (12 cycles/hour). After washing, the film was allowed to dry at room temperature.

*2.3. Neutralization of the modified chitosan-based film*

The film was placed in a 1 M NaOH solution for 1 hour. After this time, it was washed abundantly with distilled water for complete removal of NaOH and dried at room temperature for 18 hours. The final pH of the obtained film was, approximately, 6.

Example 3 - Production of wine into contact with a chitosan-based film

A white wine was produced according to the traditional winemaking method, but instead of the sulfur dioxide addition, a chitosan-based film (chitosan cross-linked with genipin) was placed in contact with the wine. After 9 months of storage, the wine presented microbiological stability, since no colony forming units of yeasts and bacteria were detected. The physical-chemical analysis showed that, when compared with the wine with $SO_2$, the wine with film had identical antioxidant activity and phenolic compounds composition. However, the colours of the wines were different, the white wine which was in contact with the chitosan film showed lower color intensity. According to the CIELAB parameters, the color of the wine with film was greener and less yellow when compared to the wine without $SO_2$.

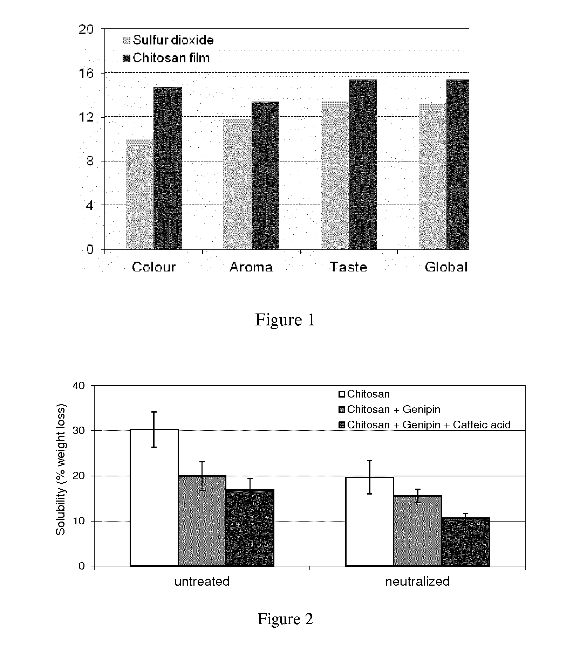

Wine sensorial analysis performed by a trained panel revealed that the white wine treated with chitosan film received the best global evaluation with respect to taste, aroma, and color in comparison to the wine produced without $SO_2$ or film addition. The comparison with the wine produced by the traditional winemaking, with $SO_2$ addition, showed that the white wine produced according to the process described in this invention was considered by the panel to be the best wine of the trials (Figure 1).

Example 4 - Solubility and antioxidant activity of chitosan film without chemical modification, chitosan cross-linked with genipin and chitosan grafted with caffeic acid and cross-linked with genipin.

Following the procedures described in the detailed description, chitosan-based films were prepared according to example 1, and films with chitosan cross-linked with genipin were also prepared. Figure 2 shows the solubility of these films and, for comparison, the solubility of an unmodified chitosan film, prepared according to the same procedure. The chitosan-based films prepared with caffeic acid and genipin or only with genipin showed about 45% lower solubility, in acidic medium, when compared to those of chitosan produced without chemical modification. The neutralization of the films (NaOH treatment) decreases the solubility of the chitosan-based films, showing that the film with chitosan grafted with caffeic acid and cross-linked with genipin has a solubility of approximately 10% (Figure 2), which represents a decrease of 36% in comparison to the untreated film.

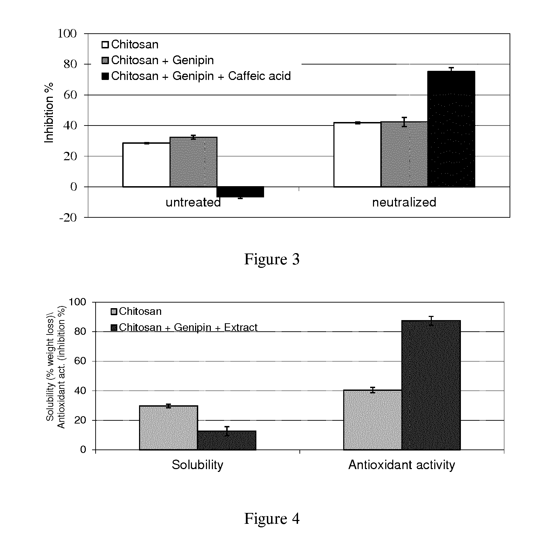

The antioxidant activity of chitosan-based films with caffeic acid and/or genipin, as well as the unmodified chitosan film, with and without neutralization with NaOH, is shown in Figure 3.

The results of the antioxidant activity of the films showed that neutralization (treatment with NaOH) increases the antioxidant activity of the chitosan films, particularly in the chitosan films grafted with caffeic acid and cross-linked with genipin. These films, after neutralization, showed an antioxidant activity about 45% higher than the neutralized films with unmodified chitosan and chitosan cross-linked with genipin (Figure 3).

The antimicrobial activity was determined for the three types of films in a yeast culture (*Saccharomyces cerevisiae*). Cell suspensions containing the films, chitosan film grafted with caffeic acid and/or cross-linked with genipin, and unmodified chitosan film, showed no CFU after incubation for 48 hours, whereas the control (cells suspension inoculated in the same concentration without film addition) showed $8 \times 10^7$ CFU/mL.

The chitosan film cross-linked with genipin and grafted with caffeic acid showed low solubility in acidic medium and high antioxidant activity in comparison with unmodified chitosan film. The modified chitosan film retained the antimicrobial activity.

Example 5 - Solubility and antioxidant activity of chitosan-based film cross-linked with genipin and grafted with antioxidant phenolic compounds extracted from grape or wine

The wine extracts were obtained by solid phase extraction (SPE) with a $C_{18}$ polymer (octadecyl). The column was activated with methanol and washed with distilled water before use. The red wine was distilled at atmospheric pressure to remove the ethanol. The de-alcoholised residue was eluted through the $C_{18}$ column at the pH of wine (about 3.5). The non retained fraction was eluted with distilled water and the phenolic compounds were eluted with methanol containing 0.1 % HCl (acidic methanol). The pH of this fraction was increased to 7 with 1 M NaOH and diluted 2 times with 0.1 M phosphate buffer at pH 7. This fraction was again applied into the $C_{18}$ column, previously washed with 0.1 M phosphate buffer at pH 7. The non retained fraction eluted with the buffer at pH 7 was collected. This fraction, rich in phenolic acids with a concentration of 2.4 g/L (gallic acid equivalents), was mainly composed by caftaric, gallic, and coumaric acids, among others.

After the elution with buffer at pH 7, an elution with ethyl acetate was performed and, finally, with acidic methanol (methanol with 0.1 % HCl). The fraction eluted with acidic methanol was mainly composed by anthocyanins, being the most abundant anthocyanin the malvidin-3-glucoside (representing approximately 60%). This fraction was used with a concentration of 2.2 g/L of phenolic compounds (as gallic acid equivalents) to produce the chitosan-based films.

A chitosan-based film cross-linked with genipin and grafted with phenolic acids or anthocyanins extracted from wine was produced according to example 2. The unmodified chitosan-based film was prepared using the same procedure to be used for comparison. The films were treated with NaOH.

Figure 4 shows the solubility after 7 days in acidic medium and the antioxidant activity of the chitosan-based film cross-linked with genipin and with addition of phenolic compounds obtained from wine, and of the unmodified chitosan-based film, both prepared using the same procedure. The solubility and antioxidant activity of the films were determined as described above, except for the reaction time in ABTS$^{+\bullet}$ solution, since the antioxidant activity was determined after 48 hours. The modified chitosan-based film showed a solubility of about 12%, which is 58% lower than the solubility of the unmodified chitosan film. The antioxidant activity of the film with chitosan cross-linked with genipin and with addition of wine phenolic compounds extract was higher (approximately 100%) than the chitosan film. The film prepared with chitosan cross-linked with genipin and with anthocyanins extracted from wine showed identical antioxidant activity (inhibition percentage of 83% after 48 hours of reaction with ABTS$^{+\bullet}$ solution) in comparison to that obtained with the film with chitosan cross-linked with genipin and with the phenolic acids extract from the same wine extract.

The antioxidant activity of the film prepared with chitosan cross-linked with genipin and with addition of wine extracts was considerably higher when compared with the chitosan-based film with caffeic acid and genipin described in example 4, since the ABTS$^{+\bullet}$ inhibition after 48 hours was higher (87%) than the inhibition showed by the other film after 72 hours, approximately 75% (Figure 3). The solubility in acidic medium (after 7 days) of both films was identical, around 10% (Figures 2 and 4).

## Claims

1. Winemaking process comprising the wine production by the traditional method without sulfur dioxide addition, **characterized by** further comprising:

   a) preparing a chitosan film by adding a cross-linking agent to chitosan; or
   b) preparing a modified chitosan film comprising:

   • modifying the chitosan by covalent linkage to antioxidant phenolic compounds,
   • forming a film by reacting the modified chitosan with a plasticizer and a cross-linking agent, and
   • neutralizing the previous film;

   c) contacting the chitosan film obtained in any of the preceding steps with wine after the fermentation.

2. Winemaking process according to claim 1, wherein in step c) 100 cm$^2$ of chitosan-based film are contacted with 750 mL of wine.

3. Winemaking process according to claim 1 or 2, wherein in step b) the chitosan modification comprises the steps of:

   - dissolving chitosan in acidic medium until a final concentration of 1.5% (w/V);
   - adding, simultaneously, to the solution obtained in the previous step, an oxidant and an antioxidant phenolic compound; and
   - maintaining the above obtained mixture under inert atmosphere, in the dark for, at least, 3 hours at a temperature of 40 °C.

4. Winemaking process according to claim 1 or 2, wherein in step b) the formation of modified chitosan film comprises the steps of:

   - dissolving the modified chitosan in acidic medium;
   - adding a plasticizer to the above solution and allowing to react at a temperature of 50 °C for 10 minutes;
   - after cooling to room temperature, adding a cross-linking agent and stirring during 30 minutes;
   - filtrating and drying the above solution to obtain a modified chitosan-based film; and
   - washing the aforementioned modified chitosan-based film with methanol and drying at room temperature.

5. Winemaking process according to claim 1 or 2, wherein in step b) the neutralization of the chitosan-based film comprises the steps of:

   - neutralizing the modified chitosan-based film with a NaOH solution for 1 hour and washing with water until pH 6; and
   - drying at room temperature for, at least, 18 hours.

6. Winemaking process according to claim 3, wherein the acidic medium is an acetic acid solution.

7. Winemaking process according to claim 3, wherein the antioxidant phenolic compound is selected from the group consisting of caffeic acid and phenolic compounds extracted from the grape or from the wine.

8. Winemaking process according to claim 7, wherein caffeic acid is used in a ratio of 3 mg of caffeic acid per gram of chitosan solution.

9. Winemaking process according to claim 7, wherein the antioxidant phenolic compounds extracted from grape or from the wine are selected among phenolic acids and anthocyanins.

**10.** Winemaking process according to claim 9, wherein the antioxidant phenolic compounds are used in a ratio of 0.7 mg of extract per gram of chitosan solution.

**11.** Winemaking process according to claim 3, wherein the oxidant is selected among potassium persulfate (KPS) and ammonium cerium (IV) nitrate (CAN).

**12.** Winemaking process according to claim 11, wherein the oxidant is 60 mM ammonium cerium (IV) nitrate (CAN) in a ratio of 1 mL of CAN solution per gram of chitosan solution.

**13.** Winemaking process according to claim 4, wherein the plasticizer is glycerol at 1 % w/w by weight of solution.

**14.** Winemaking process according to claim 4, wherein the cross-linking agent is genipin at 0.05% in relation to the film.

**15.** Production process of a chitosan-based film for application in the winemaking processing defined in any of claims 1 to 14, comprising the modification of chitosan by covalent linkage of antioxidant phenolic compounds,
**characterized by** further comprising:

i) formation a film by reacting the modified chitosan with a plasticizer and a cross-linking agent, and
ii) neutralizing the film obtained in step i).

**16.** Production process according to claim 15, wherein the modification of chitosan comprises the steps of:

- dissolving chitosan in acidic medium until final concentration of 1.5% (w/V);
- adding, simultaneously, to the solution obtained in the previous step an oxidant and an antioxidant phenolic compound; and
- maintaining the mixture obtained above under inert atmosphere, in the dark for, at least, 3 hours at a temperature of 40 °C.

**17.** Production process according to claim 15, wherein step i) comprises the steps of:

- dissolving the modified chitosan in acidic medium;
- adding a plasticizer and allowing to react at a temperature of 50 °C for 10 minutes;
- after cooling to room temperature, adding a cross-linking agent and stirring for 30 minutes;
- filtrating and drying the above solution to obtain a modified chitosan-based film; and
- washing the aforementioned modified chitosan-based film with methanol and drying at room temperature.

**18.** Production process according to claim 15, wherein step ii) comprises the steps of:

- neutralizing the modified chitosan-based film with a NaOH solution for 1 hour and washing with water until pH 6; and
- drying at room temperature during, at least, 18 hours.

**19.** Production process according to claim 16, wherein the acidic medium is an acetic acid solution.

**20.** Production process according to claim 16, wherein the antioxidant phenolic compounds are selected from the group consisting of caffeic acid and phenolic compounds extracted from the grape or the wine.

**21.** Production process according to claim 20, wherein caffeic acid is used in a ratio of 3 mg of caffeic acid per gram of chitosan solution.

**22.** Production process according to claim 20, wherein the antioxidant phenolic compounds extracted from grape or wine are selected among phenolic acids and anthocyanins.

**23.** Production process according to claim 22, wherein the antioxidant phenolic compounds extracted from grapes or wine are used in a ratio of 0.7 mg of extract per gram of chitosan solution.

**24.** Production process according to claim 16, wherein the oxidant is selected among potassium persulfate (KPS) and ammonium cerium (IV) nitrate (CAN).

**25.** Production process according to claim 24, wherein the oxidant is 60 mM ammonium cerium (IV) nitrate (CAN) in a ratio of 1 mL of CAN solution per gram of chitosan solution.

**26.** Production process according to claim 17, wherein the plasticizer is glycerol at 1 % w/w by weight of solution.

**27.** Production process according to claim 17, wherein the cross-linking agent is genipin at 0.05% in relation to the film.

Figure 1

Figure 2

Figure 3

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2009175984 A1
- US 2008026100 A1
- US 2010034923 A1
- US 2006078568 A1
- US 2003108493 A1
- EP 0448674 A1
- US 2011059162 A1
- US 2005272876 A1
- US 20070299034 A1

### Non-patent literature cited in the description

- **SPAGNA et al.** Fining treatments of white wines by means of polymeric Adjuvants for their stabilization against browning. *J. Agric. Food Chem.,* vol. 48, 4619-4627